# EUROPEAN PATENT SPECIFICATION

(11) **EP 4 409 077 B1**
(45) Date of publication and mention of the grant of the patent: **08.10.2025**
(21) Application number: 22799988.5
(22) Date of filing: 26.10.2022
(51) Int. Cl.: E03F 5/04, F16K 15/03, F16K 15/14

(54) **DEVICE FOR WATER-SEWAGE SYSTEMS PREVENTING REGURGITATION PHENOMENA**
VORRICHTUNG FÜR WASSERABWASSERSYSTEME ZUR VERHINDERUNG VON REGURGITATIONSPHÄNOMENEN
DISPOSITIF POUR SYSTÈMES D'EAUX USÉES EMPÊCHANT LES PHÉNOMÈNES DE RÉGURGITATION

(30) Priority: 05.11.2021 IT 202100028268
(43) Date of publication of application: 07.08.2024
(73) Proprietor: Amorini, Mauro, 00166 Roma (IT); De Leo, Luciano Antonio, 00062 Bracciano (RM) (IT)
(72) Inventor: Amorini, Mauro, 00166 Roma (IT); De Leo, Luciano Antonio, 00062 Bracciano (RM) (IT)
(74) Representative: Cacciamani, Clizia
(86) International application number: PCT/IB2022/060289
(87) International publication number: WO 2023/079413

(56) References cited:
- KR-Y1- 200 449 920
- US-A- 4 331 254
- US-A1- 2010 006 712
- US-A1- 2011 101 014
- US-A1- 2014 373 931

## Description

### Field of the Invention

The present invention refers to a device suitable for preventing the regurgitation phenomena and the bad smells emission from the water-sewage systems. In particular, the present invention refers to such a device which consists of separate elements which join together, locked on a circular support, and which are able, first of all, to bend downwards when subjected to the gravity force generated by falling from above of solid and/or liquid material and, subsequently, to return to the position assumed before bending.

### Background.

Typically, water-sewage systems present unwelcome fluid regurgitation phenomena (liquid, foamy or gaseous), as well as phenomena related to the foul-smelling gaseous efflux emission.

Current water-sewer pipes do not allow to prevent said unwelcome liquid and gaseous regurgitation phenomena. A known partial solution, but not exhaustive, has been achieved by fitting the same water-sewer pipes with siphon fittings, designed to create a liquid fluid plug that allows to block the gaseous regurgitation flow and parallel ventilation systems for unwanted gases, usually protruding above the solar pavement level.

However, this solution is not sufficient, as it only partially blocks the gaseous regurgitation flow.

The patent application No. US 2010/005759 discloses a waste disposal device provided with a mechanism that rotates after insertion of the waste to inhibit the release of odours from the waste. The torsion assembly includes a membrane provided with slots defining an opening through which a tube passes. The membrane is made of flexible material so that it flexes downward when a person pushes waste through the central region of the membrane and returns to its initial shape after the person has removed his hand from engagement with the membrane.

The international patent application WO2011093566A1 discloses a rubber opening/closing member for the deodorization and insect-proofing of a drain which is mounted on an entrance side of a drain to be opened when sewage is discharged and to be rapidly closed when the discharge of sewage is finished, thereby blocking various odour, harmful insects and the like coming up from a drain.

The patent application No. US 2011/101014 A discloses a waste disposal container for soiled items includes a container body, a lid over a top opening of the container body, and one or more diaphragms and a retaining ring installed inside the container body. Each diaphragm is a disk-shaped member made of a flexible and resilient material, partitioned into a plurality of wedge-shaped sections by a plurality of radial cuts. In use, a disposable bag is placed inside the container and is held at its top between the container body and the diaphragms and the retaining ring.

The patent No. US 4,331,254 A discloses a seal for an opening through which a hose extends which comprises a stack of flexible sheets one on top of each other; each sheet has a series of slits radiating from to the perimeter of the sheet from the centre of the sheet, where the series of slits in two adjacent sheets being offset from each other.

The patent application No. US 2014/373931 A discloses a drain valve which allows the drainage of fluids by preventing the backflow of gases from a drainage system through the drain valve. When the fluid has drained through, the component of the valve can return to the closed position. The valve can include a pressure relief conduit to help equalize pressure across the valve and permit unrestrained draining of fluid through the valve.

The Applicant of the present invention has therefore found the need to create a device that is easy to produce and install, and that is able to completely eliminate the problems relating to the anti-surge and anti-odour phenomena in the drainpipes.

### Summary of the Invention

The present invention refers to a device such as the one indicated in claim 1.

The Applicant of the present invention has in fact surprisingly found that the technical problem encountered above can be effectively and reliably solved by means of a device for water-sewage systems comprising: i) a plurality of three-dimensional elements each one having a circle wedge shape, arranged adjacent to each other so as to form all together a substantially disk-shaped three-dimensional element, and ii) a support for said plurality of elements having a circle wedge shape, wherein said support has a substantially circular crown shape, whose external circumference is substantially equal to that one of said disk, and is able to be positioned inside a water-sewer system so as to adhere to the walls of this system.

In the device of the present invention, each of said plurality of three-dimensional elements having a circle wedge shape:
a) is fixed to said support;
b) is able to bend downwards when subjected to the gravity force generated by the fall from above of a solid and/or liquid material, and
c) is provided with a return element suitable for creating a mechanical upward movement of the element having a circle wedge shape after said downward bending.

In this way, a tight adhesion is obtained between the walls of the water-sewer system and the support, and between the support and the disk formed by the plurality of three-dimensional elements having a circle wedge shape, such as to prevent the bad smells passage, for example, when decompressions or high air pressures are created inside a column.

Furthermore, thanks to the fact that the plurality of three-dimensional elements having a circle wedge shape are able to bend downwards when subjected to the gravity force generated by the fall from above of a solid and/or liquid material, the device of the present invention allows the downward passage of this solid and/or liquid material.

Furthermore, thanks to the presence of the return element, once the bending of the three-dimensional elements having a circle wedge shape is finished, the latter tend to be subjected to a mechanical upward movement, and therefore tend to return to the "rest" position they were in before their bending. The rising of this solid and/or liquid material and bad smells through the device of the present invention is thus prevented, since, in this rest position, the three-dimensional elements having a circle wedge shape are firmly fixed to the support and oppose their upward opening. Furthermore, in this way, a vortex is created in the water-sewer system which increases the output speed of the solid and/or liquid material, thus improving the emptying and cleaning of the water-sewer system itself, thus also improving its efficiency.

Said return element is a tab positioned along the lateral surface of one side (radius) of said element having a circle wedge shape. Furthermore, said tongue is provided with a wave-shaped lip extending laterally with respect to said tab so that each element having a circle wedge shape overlaps said lip of the element having a circle wedge shape adjacent to it.

In this way, each element having a circle wedge shape is thus firmly fixed to the similar element adjacent to it, no element having to fold back on itself. In this way, an entire firmly locked disk is formed wherein any cracks that may be created between two elements having a circle wedge shape adjacent to each other are sealed. The bad smells passage is thus further avoided.

The device of the present invention can be housed for example under the neck of a toilet drain of a single housing unit, inside the drain seal on the ground, or on the wall, without the common parts or masonry use. It can also be applied in the main drain column of an apartment building, requiring simple masonry works in this case, if the column is inside a cavedium, otherwise a simple plumbing work.

According to a preferred embodiment, said tab is locked inside said support.

In this way, the tab creates a return mechanical movement upwards of the element having a circle wedge shape once its downward bending is completed.

According to a preferred embodiment, each of said plurality of elements having a circle wedge shape is provided with at least one through hole, suitable for allowing the passage through it/them of a corresponding fastening element. According to a preferred embodiment, said fastening means are, for example, pins, dowels, cylinders, and the like.

In this way, each element having a circle wedge shape is fixed to the support.

According to a preferred embodiment, said through hole is arranged along the circle arc of said circle segment.

According to a preferred embodiment, each of said plurality of elements having a circle wedge shape is provided with at least two of said through holes, arranged along the circle arc of said circle segment.

According to a preferred embodiment, said support substantially in the form of a circular crown is provided with a plurality of protuberances arranged along said circular crown and protruding vertically from the support itself, wherein each of said protuberances is able to pass through one of said through holes obtained in the three-dimensional elements having a circle wedge shape.

In this way, each element having a circle wedge shape is firmly fixed to the support by means of these protuberances, acting as fastening means. The entire disc made up of the totality of elements having a circle wedge shape is thus fixed to the support.

According to a preferred embodiment, said wave-shaped lip is further provided with a protuberance extending beyond the vertex of said sides (radius) of said element having a circle wedge shape facing the centre of said disc.

In this way, the central hole of the disc formed by the elements having a circle wedge shape is closed. The upward opening of these elements is thus prevented, except when strong thrusts occur, thus avoiding the small animal's passage therethrough.

According to a preferred embodiment, each of said elements having a circle wedge shape is provided with a first rib positioned along one side (radius) of said element having a circle wedge shape and with a second rib positioned along the other side (radius) of said element having a circle wedge shape.

According to a preferred embodiment, each of said first and second ribs substantially extends up to the outer perimeter of said support.

In this way, the elements having a circle wedge shape are provided with a spring and an upward end-of-stroke movement.

According to a preferred embodiment, the device of the present invention further comprises a closing device having substantially the same shape as said support and provided with a plurality of anchoring holes suitable for allowing the passage therethrough of the terminal part of a corresponding one of said plurality of support protuberances, after said end part of each support protuberance has already passed through the corresponding through hole of said three-dimensional element.

In this way, once each protuberance vertically protruding from the support has passed, first through a corresponding through hole of a three-dimensional element having a circle wedge shape and, subsequently, through a corresponding anchorage hole of the closing device, the device of the present invention is assembled in a compact way and ready to be inserted into the walls of the water-sewer system.

According to a preferred embodiment, each of said elements having a circle wedge shape is made of a mixture comprising eco-compatible materials, such as for example rubber, or the like.

According to a preferred embodiment, each of said elements having a circle wedge shape is made of a mixture comprising natural essences.

In this way, these natural essences release an odour that determines the medium-large-sized animals, such as mice, to go away, which could have such a body mass as to force the disc to open and therefore to pass through it, but which instead give up because of the smell emanating from natural essences.

According to a preferred embodiment, said circular support is made from a polymer.

According to a preferred embodiment, the device of the present invention has a thickness in the range from about 1 centimetre to about 3 centimetres (when the device is closed, in the rest position), and between about 4 centimetres to about 10 centimetres (when the device is open, in a position subjected to the gravity force generated by the fall from above of solid and/or liquid material).

In this way, the reduced thickness allows the use of less invasive hydraulic works.

Further features and advantages of the present invention will be better highlighted by examining the following detailed description of a preferred, but not exclusive, embodiment of the invention, illustrated by way of non-limiting example, with reference to the following figures wherein:
- figure 1 shows a three-dimensional element having a circle wedge shape;
- figure 2 shows two three-dimensional elements of figure 1 placed adjacent to each other;
- figure 3 shows the support to which the two elements of figure 2 have been fixed;
- figure 4 shows the support to which all the elements of figure 1 have been fixed so as to form a disk;
- figure 5 shows the closing device;
- figure 6 shows an embodiment of a device for water-sewage systems of the present invention, wherein the support of figure 3, the three-dimensional elements having a circle wedge shape of figure 1 have been assembled together to form a disc, and the closure device of figure 5;
- figure 7 shows the device for water-sewage systems in figure 6 placed inside a toilet extension.

### Detailed description

The following detailed description refers to a particular embodiment of the device for water-sewage systems 1 of the present invention.

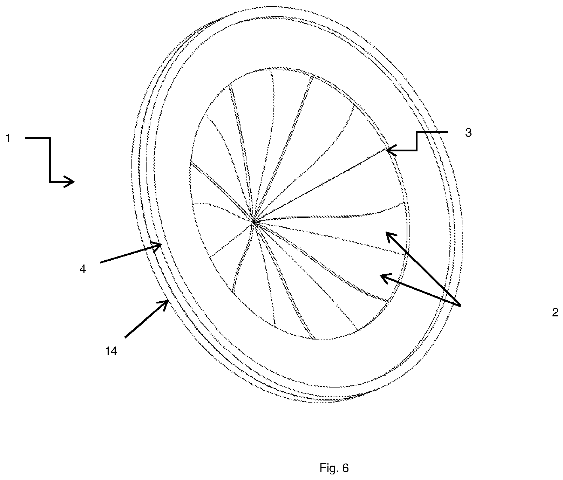

The device for water-sewage systems 1 (shown in figure 6) is constituted by a support 4, a disk 3 formed by a plurality of three-dimensional elements having a circle wedge shape, and a closing device 14 fixed one each other as described below.

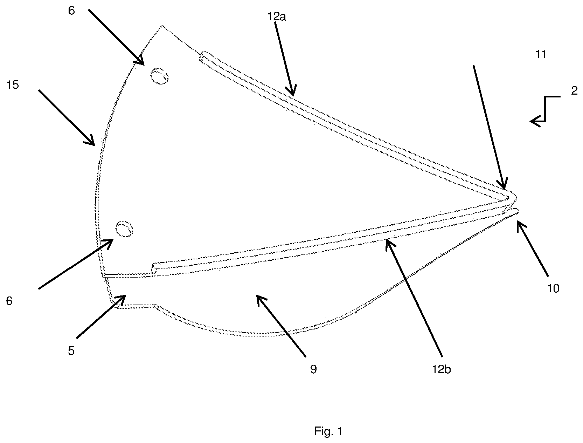

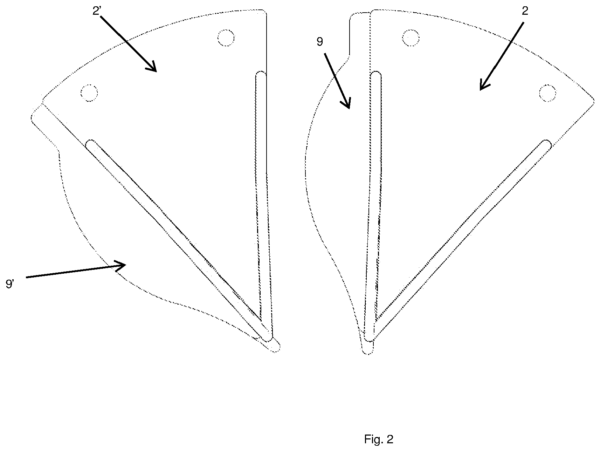

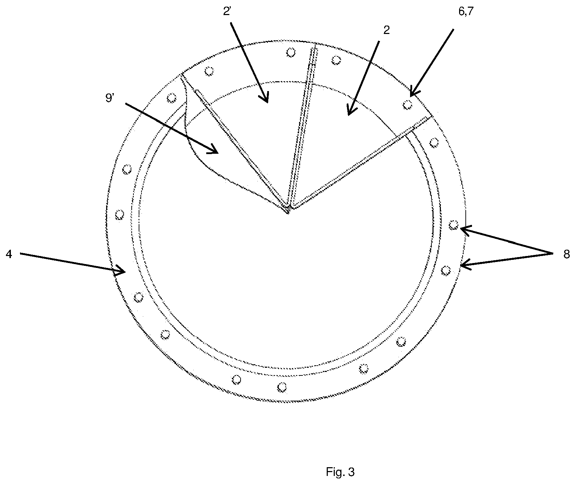

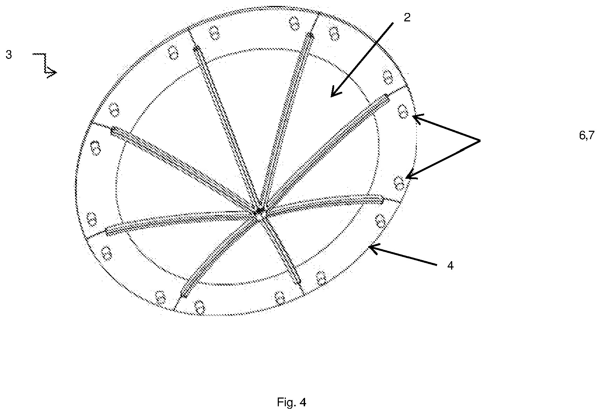

Figure 1 shows in detail a three-dimensional element 2 having a circle wedge shape that, together with other elements 2, forms the disk 3 of figure 4 (furthermore, in figure 2 two three-dimensional elements 2 having a circle wedge shape are shown and figure 3 shows the two elements 2 of figure 2 fixed to the support 4). Each three-dimensional element 2 having a circle wedge shape has a thickness of about 0.1 centimetres and is made of a mixture comprising eco-compatible materials, such as for example rubber, or the like.

Furthermore, each three-dimensional element having a circle wedge shape 2 is provided with two through holes 6, arranged along the circle arc 15, and adapted to allow the passage through them of corresponding fastening elements 7, such as the protuberances 7, shown in figure 3.

Each three-dimensional element having a circle wedge shape 2 is also provided with a return element 5, such as a tab 5, positioned along the lateral surface of one side (radius) of the three-dimensional element 2 itself (Figure 1). Each tab 5 is provided with a wave-shaped lip 9 which extends laterally with respect to the tab 5 itself, so that each segment having a circle wedge shape 2' overlaps the lip 9 of the segment having a circle wedge shape 2 adjacent to it (Figure 3). Each wave-shaped lip 9 is also provided with a protuberance 10 which extends beyond the vertex 11 of the sides (rays) of the three-dimensional element 2 facing the centre of the disc 3, so as to close the central hole of the disc 3 which it is formed with the other three-dimensional elements having a circle wedge shape 2.

Each three-dimensional element 2 is also provided with a first rib 12a positioned along one side (radius) of the element 2 itself and a second rib 12b positioned along the other side (radius) of the element 2 itself. Each rib 12a, 12b substantially extends up to the internal perimeter of the support 4.

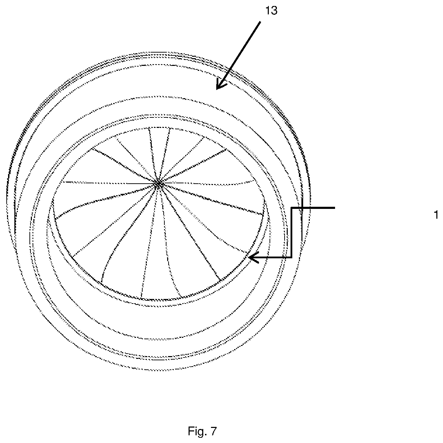

The support 4, made with a polymer, is substantially in the shape of a circular crown (Figure 3), the external circumference of which is substantially the same as that of the disc 3. The support 4 is suitable for being positioned inside a water system sewer so as to adhere to the walls of this system (in figure 7 the device 1 is placed inside an extension of the neck of a toilet bowl 13). The support 4 is provided with a plurality of protuberances 7 arranged along the circular crown, vertically projecting from the support 4 itself; each of the protuberances 7 is adapted to pass through a corresponding through hole 6 obtained in a three-dimensional element having a circle wedge shape 2.

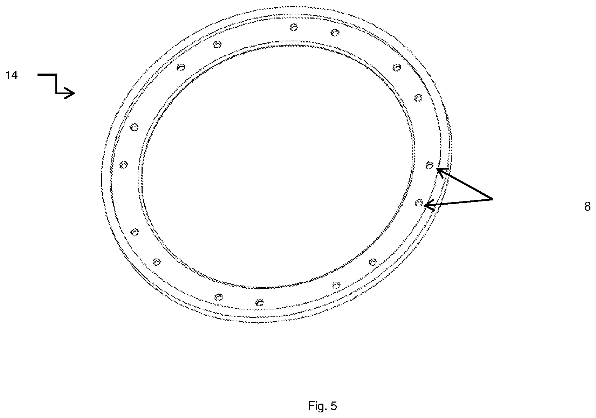

The device 1 also comprises a closing device 14 (figure 5) which has substantially the same shape as the support 4 and is provided with a plurality of anchoring holes 8 suitable for allowing the terminal part of a corresponding protuberance 7 of the support 4 to pass therethrough, after that the end part of the protuberance 7 of the support 4 has already passed through the corresponding through hole 6 of the three-dimensional element 2.

Operationally, once the device 1 has been positioned in the extension of a toilet bowl 13 (figure 7) in the "rest" position, each three-dimensional element having a circle wedge shape 2 tends to bend downwards when it is subjected to the gravity force generated by the fall from above of a solid and/or liquid material; the solid and/or liquid material then passes beyond the disc to go into the sewer drain.

Once the solid and/or liquid has passed beyond the disk 3, the return tab 5 of each element having a circle wedge shape 2 creates a mechanical upward movement of the corresponding element 2 itself, which, once the bending downwards is ended, therefore, tends to occupy again the same "rest" position it had before the bending, ready for a new possible bending.

In this way, any rise of unpleasant odours from the toilet upwards is prevented, since the device 1 of the present invention creates a barrier resistant even to the pressure exerted by small animals.

Moreover, thanks to the fact that each element 2 that forms the disc 3 is made with a mixture also including natural essences, even larger animals, such as mice which could be present in the water-sewer system and which could have a significant impact force against the device 1, are actually kept away the device 1.

Furthermore, in this way, a vortex is created in the water-sewer system 1 which increases the output speed of the solid and/or liquid material, thus improving the emptying and cleaning of the water-sewage system 1 itself, thus also improving its efficiency.

Of course, many modifications and variations of the described preferred embodiments will be apparent to those skilled in the art, still remaining within the scope of the utility model.

Therefore, the present invention is not limited to the preferred embodiments described, illustrated only by way of non-limiting example, but is defined by the following claims.

## Claims

1. Device (1) for water-sewage systems comprising: i) a plurality of three-dimensional elements (2,2') each one having a circle wedge shape, arranged adjacent to each other so as to form all together a substantially disk-shaped element (3), and ii) a support (4) for said plurality of elements having a circle wedge shape (2,2'), wherein said support (4) has a substantially circular crown shape,
wherein each of said plurality of three-dimensional elements having a circle wedge shape (2,2'):
a) is fixed to said support (4);
b) is able to bend downwards when subjected to the gravity force generated by the fall from above of a solid and/or liquid material, and
c) is provided with a return element (5) suitable for creating a mechanical upward movement of the element having a circle wedge shape (2,2') after said downward bending,
wherein said return element (5) is a tab (5) positioned along the lateral surface of one side (radius) of said element having a circle wedge shape (2,2'),
**characterized in that** said tab (5) is provided with a wave-shaped lip (9) extending laterally with respect to said tab (5) so that each element having a circle wedge shape (2') overlaps said lip (9) of the element having a circle wedge shape (2) adjacent to it.

2. Device (1) according to claim 1, wherein each of said plurality of three-dimensional elements having a circle wedge shape (2,2') is provided with at least one through hole (6) arranged along the circle arc (15) of said circle wedge (2,2') and wherein said support (4) having a substantially circular crown shape is provided with a plurality of protuberances (7) arranged along said circular crown and vertically projecting from the support (4) itself, wherein each of said protuberances (7) is able to pass through a corresponding one of said through holes (6) obtained in the three-dimensional elements having a circle wedge shape (2,2').

3. Device (1) according to claim 2, wherein each of said plurality of three-dimensional elements (2,2') is provided with at least two of said through holes (6).

4. Device (1) according to any one of the preceding claims, wherein said wave-shaped lip (9) is further provided with a protuberance (10) extending beyond the vertex (11) of said sides (rays) of said element having a circle wedge shape (2,2') facing the center of said disk (3).

5. Device (1) according to any one of the preceding claims, wherein each of said elements having a circle wedge shape (2,2') is provided with a first rib (12a) positioned along one side (radius) of said element having a circle wedge shape (2,2') and of a second rib (12b) positioned along the other side (radius) of said element having a circle wedge shape (2,2').

6. Device (1) according to claim 5, wherein each of said first and second ribs (12a, 12b) substantially extends up to the inner perimeter of said support (4).

7. Device (1) according to any one of the preceding claims from 2 to 6 which further comprises a closure device (14) having substantially the same shape as said support (4) and provided with a plurality of anchoring holes (8) suitable to allow the passage through them of the end part of a corresponding one of said plurality of protuberances (7) of the support (4), after said end part of each protuberance (7) of the support (4) has already passed through the corresponding through hole (6) of said three-dimensional element having a circle wedge shape (2,2').

8. Device (1) according to any one of the preceding claims, wherein each of said three-dimensional elements having a circle wedge shape (2,2') is made of a mixture comprising eco-compatible materials, such as for example rubber, or the like and said support (4) is made with a polymer.

## Patentansprüche

1. Vorrichtung (1) für Wasser-Abwasserbehandlungssysteme, die Folgendes umfasst: i) mehrere dreidimensionale Elemente (2,2'), wobei jedes eine kreisförmige Keilform hat, die jeweils nebeneinander angeordnet sind, sodass sie zusammen ein im Wesentlichen scheibenförmiges Element (3) bilden, und ii) einen Träger (4) für besagte mehrere Elemente mit kreisförmiger Keilform (2,2'), wobei besagter Träger (4) eine im Wesentlichen kreisförmige Kronenform aufweist,
wobei jedes der mehreren dreidimensionalen Elemente eine kreisförmige Keilform hat (2,2'):
a) an besagtem Träger (4) befestigt ist;
b) in der Lage ist, sich nach unten zu biegen, wenn es der Schwerkraft ausgesetzt ist, die durch den Fall eines festen und/oder flüssigen Materials von oben entsteht, und
c) mit einem Rückstellelement (5) ausgestattet ist, das geeignet ist, eine mechanische Aufwärtsbewegung des Elements mit kreisförmiger Keilform (2,2') nach der Abwärtsbiegung zu erzeugen,
wobei besagtes Rückstellelement (5) eine Schlaufe ist (5), die entlang der Oberfläche einer Seite (Radius) des besagten Elements mit kreisförmiger Keilform (2,2') positioniert ist,
und dadurch ausgezeichnet ist, dass besagte Schlaufe (5) mit einem wellenförmigen Rand (9) ausgestattet ist, der sich seitlich zur besagten Schlaufe (5) erstreckt, sodass jedes Element mit kreisförmiger Keilform (2') besagten Rand (9) des benachbarten Elements mit kreisförmiger Keilform (2) überlappt.

2. Vorrichtung (1) gemäß Anspruch 1, wobei jedes der dreidimensionalen Elemente mit kreisförmiger Keilform (2,2') mit mindestens einem Durchgangsloch (6) ausgestattet ist, das entlang des Kreisbogens (15) des besagten Kreiskeils (2,2') angeordnet ist und wobei besagter Träger (4), der eine im Wesentlichen kreisförmige Kronenform hat, mit mehreren Ausstülpungen (7) ausgestattet ist, die entlang der besagten kreisförmigen Krone angeordnet sind und vertikal vom Träger (4) selbst vorspringen, wobei jede der besagten Ausstülpungen (7) in der Lage ist, durch eines der besagten Durchgangslöcher (6), die in den dreidimensionalen Elementen mit kreisförmiger Keilform (2,2') gewonnen wurden, durchzulaufen.

3. Vorrichtung (1) gemäß Anspruch 2, wobei jedes der mehreren dreidimensionalen Elemente (2,2') mit mindestens zwei der besagten Durchgangslöcher (6) ausgestattet ist.

4. Vorrichtung (1) gemäß einem der vorstehenden Ansprüche, wobei der besagte wellenförmige Rand (9) weiter mit einer Ausstülpung (10) ausgestattet ist, die sich über den Scheitelpunkt (11) der besagten Seiten (Strahlen) des besagten Elements mit kreisförmige Keilform (2,2') erstreckt und zur Mitte der besagten Scheibe (3) zeigt.

5. Vorrichtung (1) gemäß einem der vorstehenden Ansprüche, wobei jedes der besagten Elemente mit kreisförmige Keilform (2,2') mit einer ersten Rippe (12a) die entlang einer Seite (Radius) des besagten Elements mit kreisförmige Keilform (2,2') positioniert ist und einer zweiten Rippe (12b), die entlang der anderen Seite (Radius) des besagten Elements mit kreisförmige Keilform (2,2') positioniert ist, ausgestattet ist.

6. Vorrichtung (1) gemäß Anspruch 5, wobei jede der besagten ersten und zweiten Rippen (12a, 12b) sich im Wesentlichen bis zum inneren Umfang des besagten Trägers (4) erstrecken.

7. Vorrichtung (1) gemäß einem der vorstehenden Ansprüche von 2 bis 6, die weiter eine Verschlussvorrichtung (14) umfasst, die im Wesentlichen die gleiche Form wie der besagte Träger (4) hat und mit mehreren Verankerungslöchern (8) ausgestattet ist, die geeignet sind, den Durchgang des Endteils einer der entsprechenden mehreren Ausstülpungen (7) des Trägers (4) zu erlauben, nachdem besagter Endteil einer jeden Ausstülpung (7) des Trägers (4) bereits durch das entsprechende Durchgangsloch (6) des besagten dreidimensionalen Elements mit kreisförmige Keilform (2,2') gelaufen ist.

8. Vorrichtung (1) gemäß einem der vorstehenden Ansprüche, wobei jedes der besagten dreidimensionalen Elemente mit kreisförmiger Keilform (2,2') aus einer Mischung aus umweltverträglichen Materialien wie zum Beispiel Gummi oder dergleichen besteht und besagter Träger (4) aus einem Polymer hergestellt wird.

## Revendications

1. Dispositif (1) pour systèmes d'égouts comprenant : i) une pluralité d'éléments tridimensionnels (2,2'), chacun ayant une forme en quartier de cercle, placés côte à côte de manière à former ensemble un élément essentiellement en forme de disque (3), et ii) un support (4) pour ladite pluralité d'éléments ayant une forme en quartier de cercle (2,2'), dans lequel ledit support (4) a une forme de couronne essentiellement circulaire,
dans lequel chacun des éléments de ladite pluralité d'éléments tridimensionnels ayant une forme en quartier de cercle (2,2') :
a) est fixé audit support (4) ;
b) est capable de fléchir vers le bas lorsqu'il est soumis à la force de gravité générée par la chute par le haut d'un matériau solide et/ou liquide, et
c) est muni d'un élément de rappel (5) apte à créer un mouvement mécanique vers le haut de l'élément ayant une forme en quartier de cercle (2,2') après ladite flexion vers le bas,
dans lequel ledit élément de rappel (5) est une patte (5) positionnée le long de la surface latérale d'un côté (rayon) dudit élément ayant une forme en quartier de cercle (2,2'),
**caractérisé en ce que** ladite patte (5) est pourvue d'un rebord ondulé (9) s'étendant latéralement par rapport à ladite patte (5) de sorte que chaque élément ayant une forme en quartier de cercle (2') chevauche ledit rebord (9) de l'élément ayant une forme en quartier de cercle (2) adjacente à celui-ci.

2. Dispositif (1) selon la revendication 1, dans lequel chacun des éléments de ladite pluralité d'éléments tridimensionnels ayant une forme en quartier de cercle (2,2') est muni d'au moins un trou traversant (6) situé le long de l'arc de cercle (15) dudit quartier de cercle (2,2') et dans lequel ledit support (4) ayant une forme de couronne essentiellement circulaire est muni d'une pluralité de protubérances (7) placées le long de ladite couronne circulaire et faisant saillie verticalement depuis le support (4) lui-même, dans lequel chacune desdites protubérances (7) est capable de passer à travers un trou traversant correspondant desdits trous traversants (6) obtenus dans les éléments tridimensionnels ayant une forme en quartier de cercle (2,2').

3. Dispositif (1) selon la revendication 2, dans lequel chacun des éléments de ladite pluralité d'éléments tridimensionnels (2,2') est pourvu d'au moins deux desdits trous traversants (6).

4. Dispositif (1) selon l'une quelconque des revendications précédentes, dans lequel ledit rebord ondulé (9) est également pourvu d'une protubérance (10) s'étendant au-delà du sommet (11) desdits côtés (rayons) dudit élément ayant une forme en quartier de cercle (2,2') faisant face au centre dudit disque (3).

5. Dispositif (1) selon l'une quelconque des revendications précédentes, dans lequel chacun desdits éléments ayant une forme en quartier de cercle (2,2') est muni d'une première nervure (12a) située le long d'un côté (rayon) dudit élément ayant une forme en quartier de cercle (2,2') et d'une seconde nervure (12b) située le long de l'autre côté (rayon) dudit élément ayant une forme en quartier de cercle (2,2').

6. Dispositif (1) selon la revendication 5, dans lequel chacune desdites première et seconde nervures (12a, 12b) s'étend essentiellement jusqu'au périmètre interne dudit support (4).

7. Dispositif (1) selon l'une quelconque des revendications précédentes 2 à 6, qui comprend également un dispositif de fermeture (14) ayant essentiellement la même forme que ledit support (4) et pourvu d'une pluralité de trous d'ancrage (8) aptes à permettre le passage à travers eux de la partie d'extrémité d'une protubérance correspondante de ladite pluralité de protubérances (7) du support (4), après que ladite partie d'extrémité de chaque protubérance (7) du support (4) a déjà traversé le trou traversant (6) correspondant dudit élément tridimensionnel ayant une forme en quartier de cercle (2,2').

8. Dispositif (1) selon l'une quelconque des revendications précédentes, dans lequel chacun desdits éléments tridimensionnels ayant une forme en quartier de cercle (2,2') est fait d'un mélange comprenant des matériaux éco-compatibles, comme du caoutchouc ou des matériaux analogues, et ledit support (4) est fait d'un polymère.
